# EUROPÄISCHE PATENTSCHRIFT

(11) **EP 3 055 561 B1**
(45) Veröffentlichungstag und Bekanntmachung des Hinweises auf die Patenterteilung: **23.05.2018**
(21) Anmeldenummer: 14772165.8
(22) Anmeldetag: 24.09.2014
(51) Int. Cl.: B63B 1/10, B63B 1/12, B63B 21/50, F03D 1/06, F03D 13/25, F03D 9/25, B63B 35/44

(54) **SCHWIMMENDE WINDKRAFTANLAGEN**
FLOATING WIND POWER PLANT
ÉOLIENNES FLOTTANTES

(30) Priorität: 08.10.2013 DE 102013111115
(43) Veröffentlichungstag der Anmeldung: 17.08.2016
(73) Patentinhaber: CRUSE Offshore GmbH, 20251 Hamburg (DE)
(72) Erfinder: CRUSE, Jens, 21107 Hamburg (DE)
(74) Vertreter: RGTH
(86) Internationale Anmeldenummer: PCT/EP2014/070398
(87) Internationale Veröffentlichungsnummer: WO 2015/051998

(56) Entgegenhaltungen:
- WO-A1-2012/153107
- WO-A2-2012/105846
- FR-A1- 2 970 748
- GB-A- 2 450 624
- US-A1- 2003 168 864
- US-B2- 7 296 971

## Beschreibung

Die Erfindung betrifft eine schwimmfähige Offshore-Windkraftanlage, d.h. eine Windkraftanlage zum Einsatz vor der Küste von Außengewässern und/oder Binnengewässern.

### Stand der Technik

Aus der DE 20 2010 003 654 U1 ist eine schwimmende Windkraft-Anlage zur Erzeugung elektrischen Stroms mit um eine horizontale Drehachse rotierenden Rotorblättern bekannt. Ein von den Rotorblättern angetriebener Strom-Generator ist mittels eines Klappbügels klappbar auf einem mit mehreren Rümpfen ausgestatteten Floß angeordnet, wobei Generator und Klappbügel über mit horizontalen Schwenkachsen arbeitende, maschinell angetriebene Schwenkgelenke an das Floß angeschlossen sind. Bei dieser Windkraft-Anlage sind Anschlusskabel und Ankerkette an einem Schwimmer an beiden Bugen über eine Hahnepot, d.h. eine Aufteilung auf mehrere Ketten bzw. Seile, befestigt. Es ist ein flexibler Kabelanschluss vorhanden, der eine selbsttätige Ausrichtung der Windkraft-Anlage auf Wind bzw. Seegang ermöglicht. Dabei ist für die Befestigung eine lösbare Verbindung zum Schwimmer vorgesehen. Andererseits sind Anschlusskabel und Ankerkette an einem Betonkasten auf dem Meeresboden verankert. Der flexible Kabelanschluss ermöglicht eine selbsttätige Ausrichtung der Windkraft-Anlage auf Wind bzw. Seegang. Zur Wartung und Reparatur wird die Windkraft-Anlage in einen Hafen in ein Dock unter einen Kran oder in eine unter Land aufgestellte zentrale Wartungs- und Reparaturhalle geschleppt und dort durch Fluten der Schwimmer auf Grund gesetzt.

Aus der Druckschrift DE 10 2009 040 648 A1 ist eine schwimmfähige Offshore-Windkraftanlage bekannt mit einem Schwimmkörper und einem daran angeordneten Aufbau mit Masten, an denen zumindest ein Rotor drehbar gelagert ist, der einen Generator antreibt. Aus dieser Schrift ist weiterhin eine mechanische Kopplung der schwimmfähigen Offshore-Windkraftanlage über mehrere Lenker und Drehkranz an einen auf dem Meeresboden abgesetzten, als Fundament bezeichneten Betonankerblock bekannt. Die Lenker sind bevorzugt über den Drehkranz an dem Fundament befestigt, um eine ungehinderte Dreh- bzw. Schwenkbewegung des Schwimmkörpers um das Fundament zu ermöglichen, damit dessen Ausrichtung sich verändernden Windrichtungen angepasst werden kann. Die Drehbewegung des Schwimmkörpers erfolgt dabei bevorzugt ohne zusätzlichen Antrieb. Die Anlage dreht sich selbsttätig in den Wind, da der Drehpunkt an dem Fundament außerhalb des Schwimmkörpers angeordnet ist. Bevorzugt ist das Fundament schwimmfähig und flutbar ausgebildet, so dass die gesamte Windkraftanlage schwimmend transportiert werden kann. Eine elektrische Kopplung erfolgt über ein Stromkabel und einen weiteren Drehkranz mit Stromdurchführung an ein Seekabel.

Gemäß der Druckschrift DE 10 2009 040 648 A1 weisen die dort dargestellten Masten eine tropfenförmige Querschnittskontur auf, durch die sich eine Art Tragflächenprofil der Masten ergibt, das eine erhöhte Stabilität gegenüber auftretenden Biegekräften bereitstellt. Da der Winddruck, der auf die Rotorblätter wirkt, nicht vollständig in eine Drehbewegung umgewandelt werden kann, ergeben sich beachtliche Biegebelastungen, die durch die Konstruktion der Masten aufgefangen werden müssen. Durch die tropfenförmige Querschnittskontur, wobei der Querschnitt senkrecht zur Längserstreckung der Masten angelegt wird, ist es nicht nur möglich, eine belastungsoptimierte Gestaltung der Masten zu erreichen, sondern auch die auf die Masten wirkenden Kräfte zu reduzieren. Eine tropfenförmige Querschnittskontur verringert den auf den Mast wirkenden Winddruck, was es ermöglicht, entweder die Konstruktion dünner und leichter zu gestalten oder größere Rotoren und Generatoren zu verwenden. Weiterhin führt die tropfenförmige Querschnittsgestaltung dazu, dass bei einer sich ändernden Windrichtung der Schwimmkörper leichter und schneller in den Wind gedreht wird, so dass die Rotoren stets optimal zur Windrichtung ausgerichtet sind, ohne dass eine aufwendige, zusätzliche Verstellung notwendig ist.

Nach der Druckschrift DE 10 2009 040 648 A1 weist ferner der Schwimmkörper ein Zentralrohr auf, das von einer elliptischen oder tropfenförmigen Hülle unter Ausbildung eines Zwischenraumes umgeben ist. Ähnlich wie bei den Masten wird durch die Hülle eine strömungstechnisch günstige Kontur geschaffen, die an eine Tragflächenkonstruktion erinnert. Die elliptische Hülle bzw. eine angenähert tropfenförmige Hülle umgibt dabei das für die Statik relevante Zentralrohr. Der Zwischenraum kann mit einem Schaumwerkstoff gefüllt sein, insbesondere einem geschlossen-porigen oder einem formstabilen Schaumstoff, der eine ausreichende Druckstabilität der Hülle bereitstellt. Das Zentralrohr ist bevorzugt flutbar ausgebildet, so dass das Schwimmniveau der Windkraftanlage an die jeweiligen Bedingungen anpassbar ist. Die Dimensionierungen des Zentralrohrs und des Schwimmkörpers sind dabei so gewählt, dass die gesamte Windkraftanlage schwimmend an den gewünschten Einsatzort geschleppt werden kann. An dem Einsatzort wird die Windkraftanlage verankert und gegebenenfalls abgesenkt, um eine erhöhte Stabilität der Windkraftanlage zu erreichen. Die bevorzugte Absenktiefe beträgt dabei 5 bis 10 Meter unter die Wasseroberfläche. Darüber hinaus wird dadurch der Einfluss des Wellenganges und der Oberflächenströmungen verringert. Das Zentralrohr ist umgekehrt auch wieder entleerbar, um das Niveau der Windkraftanlage anzuheben, z.B. um sie zu Wartungszwecken in einen Hafen zu schleppen.

Die Generatoren sind mit den Rotoren an den Masten angeordnet. Die Rotoren und Generatoren können an den oberen Enden der Masten angeordnet sein. Grundsätzlich ist es auch möglich, dass die Generatoren nicht unmittelbar an den Rotoren angeordnet sind, sondern sich im Inneren der Masten oder an einer anderen Stelle an dem Schwimmkörper befinden. Dann ist notwendig, die kinetische Energie über ein Getriebe und Übertragungselemente zu den jeweiligen Generatoren zu bringen. Die Generatoren, die in sogenannten Gondeln an den Masten angeordnet sind, können starr an den Masten befestigt sein, so dass keine aufwendige Drehbefestigung der Rotoren und Generatoren an den Masten über Drehlager erfolgen muss. Dies reduziert weiterhin die Kosten für die Herstellung und Wartung der Windkraftanlage.

Aus der Druckschrift DE 10 2010 040 887 A1 ist eine schwimmende Vorrichtung zum Tragen mindestens eines Turms im Wasser mit einer schwimmenden flächigen Struktur zur Stabilisierung der Vorrichtung auf der Wasseroberfläche bekannt, wobei der mindestens eine Turm durch die flächige Struktur getragen wird. Die schwimmende Vorrichtung umfasst weiterhin mindestens ein Ballastgewicht, das so unter der flächigen Struktur angeordnet ist, dass der Schwerpunkt der gesamten Vorrichtung unterhalb des hydrostatischen Auftriebspunktes der flächigen Struktur liegt, so dass der mindestens eine Turm im Wesentlichen senkrecht zur Wasseroberfläche steht. Die flächige Struktur dient als Schwimmkörper und wirkt mit dem Ballastgewicht zusammen. Dieses kann als Ballasttrog ausgestaltet sein.

In der Druckschrift DE 10 2010 040 887 A1 sind Ausführungsformen mit unterschiedlichen Rotationsmöglichkeiten der Komponenten untereinander beschrieben. Diese variieren von einer Ausführungsform, bei der keinerlei axiale Rotation der Komponenten möglich ist, bis zu einer Ausführungsform, bei der sowohl der Turm, eine Verlängerung desselben, das Ballastgewicht als auch die flächige Struktur axial um die Längsachse des Turms rotieren können. Dadurch ergeben sich unterschiedliche Bewegungsmöglichkeiten. Ferner werden unterschiedliche Schwimmkörperformen beschrieben, wie z.B. Trapezform, Ellipsenform, Kreisform und halbrunde Form mit einer zulaufenden Spitze. Davon erlauben die Trapezform und die halbrunde Form mit der zulaufenden Spitze ein selbstständiges Ausrichten der flächigen Struktur in den Wind und/oder in die Strömung, d.h. die Wasserströmung.

Die Druckschrift DE 10 2010 040 887 A1 beschreibt weiterhin, dass durch eine geeignete Form der flächigen Struktur, des Turmes und/oder des Rotors der Windkraftanlage erreicht werden kann, dass sich der Rotor selbstständig immer in die Windrichtung dreht. Der Turm kann unterschiedliche Formen aufweisen, z. B. zylinderförmig, aber auch tropfenförmig verkleidet, sodass der Turm sich (mit dem Rotor) selbstständig in den Wind stellt. Eine solche Spezialform des Turmes wird vor allem bei den drehbaren Turmvarianten angewendet, da dies neben der Minimierung der Windlasten dazu führt, dass sich der Turm selber in den Wind dreht.

Die Druckschrift DE 10 2010 040 887 A1 beschreibt außerdem, dass die flächige Struktur auch durch eine vorgespannte Verankerungsmöglichkeit als Halbtaucher ganz oder teilweise unter die Wasseroberfläche gezogen und fixiert werden könnte, wobei das Ballastgewicht eine zusätzliche Stabilisierung der gesamten Einheit bewirkt. Bevorzugt ist eine flächige Struktur, die selber einen tiefen Schwerpunkt aufweist, also z. B. zu zwei Dritteln unter Wasser liegt. Auf diese Weise ist die flächige Struktur stabiler und das Schaukeln bzw. die Gefahr des Kippens/Kenterns der flächigen Struktur wird verringert.

Die Druckschrift DE 11 2011 100 404 T5 zeigt eine schwimmende Windkraftturbine, die einen an einer Gondel angebrachten Rotor, eine obere Säule, die mit dem Rotor verbunden ist, einen Stabilisatortank, der zwischen der oberen Säule und einer unteren Säule angeordnet ist, und einen Anker, der drehbar mit der unteren Säule über ein Kardangelenk, das eine Drehung in alle Richtungen erlaubt, verbunden ist, umfasst, wobei der Auftriebsmittelpunkt des Stabilisatortanks in Bezug auf eine Längsmittelachse, die durch die obere und die untere Säule verläuft, außermittig angeordnet ist. Die Gondel mit dem Rotor ist fest mit der oberen Säule verbunden. Ein Drehkranz im Bereich eines unteren Verankerungspunktes der Säule dient zusammen mit einem Schleifring, der in einem Querschnitt der Säule unmittelbar oberhalb der Wasserlinie angeordnet ist, der elektrischen Verbindung und ermöglicht es, dass Säule und Rotor sich ohne zusätzliche mechanische Kraft mit dem Wind drehen können und dabei der Rotor in Lee der Säule steht. Es ergibt sich dadurch eine automatische Selbstausrichtung. Der Drehkranz 14 kann zweckmäßigerweise die gleichen Spezifikationen haben wie Drehkränze, die beispielsweise in Liebherr-Baukränen verwendet werden, da diese Wasser/Salz und einem Langzeiteinsatz unter extremen Bedingungen widerstehen können. Dabei haben der Drehkranz und der Schleifring zweckmäßigerweise eine Konstruktion, die ein Verdrehen eines Stromkabels verhindert, das in der Windkraftturbine von einem in der Gondel befindlichen Generator über einen unteren Teil der Windkraftturbine zu dem Verteilernetz nach unten verläuft.

Nach der Druckschrift DE 11 2011 100 404 T5 hat ferner die obere Säule einen tropfen- oder flügelförmigen Querschnitt, um Verwirbelungen im Drehbereich des Rotors zu vermeiden und einen maximal laminaren Luftstrom hinter der Säule zu gewährleisten. Weiterhin ist ein Ballastsystem vorhanden, wobei die obere und die untere Säule in verschiedene Kammern unterteilt sind, die über jeweilige Leitungen zu einem gemeinsamen Anschlusspunkt verlaufen, an den ein Versorgungskabel zwischen einem Hilfsschiff und der Windkraftturbine angeschlossen wird. Der Stabilisatortank stellt eine separate Kammer dar, die über eine separate Leitung ebenfalls mit dem gemeinsamen Anschlusspunkt verbunden ist. Das Ballastsystem bildet einen Schwimmer mit Ballaststanks und Hohlräumen.

Die Druckschrift DE 11 2011 100 404 T5 beschreibt bevorzugt Windkraftturbinen vom Horizontalwellen-Typ mit getriebelosem Aufbau. Nur davon abweichende Konstruktionen, z.B. mit vertikal in der Säule angeordnetem Generator, weisen ein Getriebe, z.B. ein Kegelradgetriebe in der Gondel, auf. Die getriebelose Ausführung stellt eine auch darüber hinaus übliche Bauform dar.

Aus der Druckschrift EP 1 269 018 B1 bzw. deren als DE 601 31 072 T2 veröffentlichter Übersetzung ist eine schwimmende Offshore-Windkraftanlage bekannt, umfassend wenigstens eine auf einem schwimmenden Unterbau aus wenigstens zwei Pontons mit Tanks montierte Windmühle, wobei die wenigstens eine Windmühle ein am oberen Ende eines Turms montiertes Maschinengehäuse bzw. Maschinenabteil aufweist und der Unterbau am Boden einer See oder eines Sees durch eine Verbindung fixiert ist. Der Unterbau umfasst wenigstens zwei Tanks und wenigstens eine Einheit zum Verlagern von Flüssigkeit zwischen den Tanks oder den Tanks und der Umgebung. Am Montageort wird die Windmühle mit dem Boden der See mit Hilfe eines Ankers verankert, der mit dem Unterbau mittels eines Ankerseils oder einer Ankerkette verbunden ist. Außerdem kann die Ankerkette vorteilhaft mit einem Seekabel versehen werden. Das Seekabel überträgt die von der Windmühle erzeugte Elektrizität zu einer festen Kabeleinrichtung am Boden der See, von wo die erzeugte Elektrizität zur Küste geleitet wird.

In einer in der Druckschrift EP 1 269 018 B1 bzw. deren als DE 601 31 072 T2 veröffentlichter Übersetzung als bevorzugt bezeichneten Ausführungsform ist das Maschinenabteil fest am Turm verankert und weist die Windmühle keinen Gierungsmechanismus auf. Daher giert die Windmühle nur mit Hilfe der Gierung des Unterbaus, mit der Befestigung am Boden der See als Drehmittelpunkt, wodurch sich eine automatische Selbstausrichtung ergibt. Weiterhin wird es in dieser Druckschrift als nach der Erfahrung erwiesen bezeichnet, dass sich der Wind selten um 360 Grad oder mehr dreht, und ein Verwinden des Seekabels oder des Ankerseils oder der Ankerkette daher kein Problem sein wird. Ferner ist der Turm in Windrichtung schlanker als quer dazu. Um den Windschatten zu begrenzen, gestaltet man den Turm in einer Form, die derjenigen des Flügelprofils oder dergleichen entspricht, was das Profil begrenzt und es in Richtung des Windes aerodynamisch macht.

Aus der Druckschrift DE 24 57 368 A1 ist ein Luftschlauch mit einer Wirbelkupplung bekannt. Über die Wirbelkupplung ist ein Druckluftwerkzeug an den Luftschlauch anschließbar. Dabei umfasst die Wirbelkupplung einen inneren und einen äußeren Anschlusskörper. Am inneren Anschlusskörper ist der Luftschlauch eingespannt und festgehalten. Der äußere Anschlusskörper ist in das Werkzeug eingeschraubt. Der innere Anschlusskörper hat eine rohrförmige, nach vorn gerichtete Verlängerung, die in den hohlen äußeren Anschlusskörper eingesteckt werden kann. Der äußere und der innere Anschlusskörper können relativ zueinander verdreht werden, ohne dass die Körper voneinander getrennt werden müssen. Infolgedessen kann sich auch der Schlauch gegenüber dem Werkzeug verdrehen, ohne dass auf den Schlauch irgendein Drehmoment oder Druck übertragen wird. Mit dieser Wirbelkupplung werden jedes Biegen oder Verwickeln oder andere Beschädigungen des Schlauches vermieden.

Aus der Druckschrift DE 25 32 665 A1 ist ein Skifang-Seile-Gurte-Riemen mit einer Aufwickelungsvorrichtung bekannt. Diese umfasst ein Verlängerungsseil, dessen Ende mittels einer zweiteiligen Wirbelkupplung mit einer Schlinge eines Fangseils verbunden ist. Die Wirbelkupplung gestattet eine Verdrehung der beiden verbundenen Seile in einander entgegengesetzten Richtungen um ihre Längsachsen.

Aus der Druckschrift WO 02/073032 A1 ist eine schwimmende Offshore-Windkraftanlage bekannt, die ein Einpunkt-Verankerungssystem, einen Schwimmkörper und eine Windkrafterzeugungseinheit umfasst. Der aus in wenigstens einem Dreieck angeordneten Teilen zusammengesetzte Schwimmkörper schwimmt an der Meeresoberfläche und ist an einer Spitze des Dreiecks über das Einpunkt-Verankerungssystem am Meeresboden verankert, um den Schwimmkörper stets in gleichbleibender Ausrichtung zum Wind zu halten. Als Einpunkt-Verankerungssystem ist eine Turm-Ankereinheit vorgesehen. Diese weist einen Turm in Form einer Drehscheibe auf, der mit einem Joch durch ein Lager derart verbunden ist, dass der Schwimmkörper horizontal um einen Verankerungspunkt des Turms drehbar ist. Das Joch ragt seitlich am Schwimmkörper an einer der Spitzen des Dreiecks hervor. Der Turm ist am Meeresboden durch eine Mehrzahl von Ankerketten und Anker verankert. Ein Unterseekabel ist über den Turm mit dem Schwimmkörper verbunden.

Aus der US 2003/0168864 A1 ist eine schwimmende Offshore-Windkraftanlage bekannt, die eine als Halbtaucher mit Ballasteinheiten und Auftriebseinheiten ausgebildete Schwimmereinheit sowie eine Anordnung aus mehreren Rotoren umfasst. Über eine an einer Festmacheboje befestigte Kombination einer Stromleitung und eines Halteseils ist die Offshore-Windkraftanlage am Meeresboden verankert.

Aus der WO 2012/105846 A2 ist eine Offshore-Windkraftanlage bekannt, welche einen schwimmfähigen Turm und einen Rotor umfasst. Der Turm ist über eine starre Verbindung am Meeresboden verankert, wobei die Verbindung und zur Beförderung von elektrischer Leistung vorgesehene Stromleitungen hinsichtlich des Meeresbodens stationär angeordnet sind.

### Darstellung der Erfindung: Aufgabe, Lösung, Vorteile

Die Erfindung hat die Aufgabe, eine schwimmfähige Offshore-Windkraftanlage der beschriebenen Art weiter zu verbessern, insbesondere eine solche einfacher, leichter, mechanisch stabiler und betriebssicherer zu gestalten.

Diese Aufgabe wird durch eine schwimmfähige Offshore-Windkraftanlage gelöst, die die nachfolgenden Merkmale umfasst. Die Windkraftanlage ist durch ein als Kombination einer wenigstens nahezu belastungsfrei gehaltenen Stromleitung und eines wenigstens weitgehend alle zum Halten der Windkraftanlage an einem einzigen ortsfesten Verankerungspunkt auftretenden mechanischen Kräfte aufnehmenden Halteseils ausgebildetes Kabel in sechs Freiheitsgraden beweglich mit dem Verankerungspunkt verbindbar. Dabei ist eine Kupplung in einem einzigen Verbindungspunkt zwischen dem Kabel und der Windkraftanlage angeordnet und zu einer elektrischen Verbindung mit einer Schleifkupplung und zu einer mechanischen Kraftübertragung mit einer Wirbelkupplung ausgebildet. Die Windkraftanlage weist eine Trageinheit, insbesondere eine Schwimmereinheit, auf, die als Halbtaucher, auch als Semi-submersible bezeichnet, mit Ballasteinheiten und Auftriebseinheiten ausgebildet ist. Ferner weist die Windkraftanlage einen fest mit der Trageinheit verbundenen Tragmast mit einer auf diesem fest angeordneten Maschinengondel mit wenigstens einem Rotor und wenigstens einem elektrischen Generator auf. Zwischen dem Verbindungspunkt und einer im Wesentlichen vertikalen Drehebene des Rotors ist ein höchstmöglicher Horizontalabstand ausgebildet.

Grundsätzlich weist eine schwimmfähige Offshore-Windkraftanlage gegenüber einer auf einem festen Fundament am Boden eines Gewässers, insbesondere eines Sees oder am Meeresboden, gegründeten Windkraftanlage den Vorteil auf, dass auf technisch aufwendige, teure und gegen Umwelteinflüsse anfällige Gründungsbauten verzichtet werden kann. Zugleich bleibt die gesamte Windkraftanlage manövrierfähig, kann also zur Montage und Demontage sowie zu Wartungs- und Reparaturzwecken leicht von ihrem Einsatzort an einen ufernahen Ort, insbesondere in einen Hafen oder dergleichen, und umgekehrt nach einer Montage oder Reparatur aus dem Hafen an den Einsatzort verholt werden. Allein durch diese Ausgestaltung ergibt sich eine bedeutende Kostenreduktion bei zugleich höherer Betriebsbereitschaft und verringerten Eingriffen in die Umwelt.

Zur Verankerung der Windkraftanlage an ihrem Einsatzort sowie zur Übertragung der gewonnenen elektrischen Energie ist die Windkraftanlage über ein Kabel mit einem einzigen, ortsfesten, d.h. am Boden des Gewässers, auf dem die Windkraftanlage zum Einsatz gelangt, fest angeordneten Verankerungspunkt verbunden. Dabei ist die Kupplung zwischen dem Kabel, das als kombinierte Stromleitung und Halteseil dient, und der Windkraftanlage im einzigen Verbindungspunkt derart gestaltet, dass zur elektrischen Leistungsübertragung eine elektrische Schleifkupplung vorgesehen ist und dass zur mechanischen Kraftübertragung eine Wirbelkupplung vorgesehen ist. Eine solche Verbindung bzw. Verankerung an einem einzigen Punkt, d.h. an einem einzigen Verankerungspunkt und einem einzigen Verbindungspunkt über ein einziges Kabel wird auch als Single-Point-Verbindung bezeichnet. Diese Konstruktion sichert, dass die schwimmende Windkraftanlage sich im Rahmen der durch die Längenabmessung des Kabels gegebenen Möglichkeiten in drei translatorischen Freiheitsgraden entsprechend z.B. kartesischen Koordinaten am Einsatzort bewegen kann, auch als X-, Y- und Z-Richtung bezeichnet, und dass zusätzlich noch drei rotatorische Freiheitsgrade gegeben sind, da eine Drehung um drei räumliche Achsen, z.B. drei Achsen im kartesischen Koordinatensystem, auch als X-Achse, Y-Achse oder Z-Achse bezeichnet, zugelassen wird. Damit ermöglicht die Kupplung zwischen dem Kabel und der Windkraftanlage deren völlig freie Bewegung gemäß Wind und Seegang in insgesamt sechs Freiheitsgraden, ohne dass dadurch eine in Art und Höhe unzulässige Beanspruchung des Kabels entstehen könnte. Insbesondere kann das Kabel durch diese Konstruktion auch bei beliebigen translatorischen und/oder rotatorischen Bewegungen der Windkraftanlage weder brechen noch verdrillen. Gegenüber einer getrennten Führung einer Ankertrosse oder -kette und eines elektrischen Anschlusskabels ergibt sich zusätzlich der Vorteil, dass ein elektrische und mechanische Verbindung kombinierendes Kabel ein Verdrillen ausschließt, wie es bei einer getrennten Führung durch Drehbewegungen der Windkraftanlage auftreten muss.

Der Entlastung empfindlicher Bestandteile des Kabels und damit einer Erhöhung der Beanspruchbarkeit dient ferner die Ausbildung des Kabels derart, dass die darin umfasste Stromleitung wenigstens nahezu belastungsfrei gehalten ist, wohingegen das Halteseil wenigstens weitgehend alle zum Halten der Windkraftanlage an ihrem einzigen ortsfesten Verankerungspunkt auftretenden mechanischen Kräfte aufnimmt. Durch diese Zugentlastung wird die Stromleitung zusätzlich gegen Beschädigungen geschützt.

Erfindungsgemäß sind Ballasteinheiten, bevorzugt Ballasttanks, deren Füllung dem Gewicht, der Gewichtsverteilung und den Betriebsbedingungen der Windkraftanlage anpassbar ist, und Auftriebseinheiten, insbesondere als Hohlräume ausgestaltet, vorgesehen, die von der Trageinheit, insbesondere einer Schwimmerkonstruktion, umfasst sind bzw. diese Trageinheit bilden. Besonders bevorzugt bildet diese Schwimmerkonstruktion einen Halbtaucher. Dieser wird im Betrieb soweit unter die Wasseroberfläche abgesenkt, dass sich eine möglichst stabile Lage der Windkraftanlage im Wasser ergibt, d.h. dass insbesondere Krängung, Stampfen und Rollen der Windkraftanlage minimal gehalten werden. Die Trageinheit kann dazu vorteilhaft mit einem Doppelboden ausgebildet sein, in dem die Ballasttanks großvolumig angeordnet sind. Insbesondere sind die Ballasttanks in einer möglichst tiefen Lage in der Trageinheit angeordnet und bilden gefüllt einen möglichst hohen Gewichtsanteil am Gesamtgewicht der Windkraftanlage. Bevorzugt ist ein Gewichtsanteil von ca. 70% des Gesamtgewichts der Windkraftanlage. Zugleich sind die Auftriebseinheiten in einer möglichst hohen Lage in der Trageinheit angeordnet. Insgesamt wird dadurch erreicht, den Massenschwerpunkt der Konstruktion der Windkraftanlage mit dem hohen Tragmast möglichst tief zu halten. Dieses erzeugt zusammen mit einer hinreichend großen waagerechten Abmessung der Trageinheit ein großes rückstellendes Moment entgegen einem durch Winddruck und Seegang auf die Windkraftanlage wirkenden krängenden Moment, auch wenn dieses durch eventuell nicht von vorn kommendem, d.h. wenigstens nahezu in Richtung der Rotationsachse des Rotors einfallendem Wind oder Seegang erzeugt wird. Dadurch ergibt sich auch bei ungünstigen Witterungsverhältnissen, z.B. bei plötzlichen Winddrehungen oder Sturm, eine stabile und sichere Lage der Windkraftanlage im Wasser.

Der elektrische Generator ist mit der Maschinengondel, die sein Gehäuse bildet, fest auf dem Tragmast angeordnet. Daher ist kein großes, sensibles und sehr teures Drehlager, auch als Gierlager bezeichnet, erforderlich, da sich die ganze schwimmende Windkraftanlage zum Wind ausrichtet. Dies macht die Windkraftanlage leichter sowie mechanisch sehr viel stabiler und hilft damit, den Massenschwerpunkt der gesamten Windkraftanlage niedrig zu halten, und vermeidet an einer hochbelasteten Stelle, wie sie die Verbindung zwischen Maschinengondel und Tragmast darstellt, Verschleiß. Da außerdem der Tragmast fest mit der Trageinheit verbunden ist, ergibt sich insgesamt eine sehr stabile, starre Baueinheit aus Trageinheit, Tragmast und Maschinengondel.

Von besonderem Vorteil ist die gelenkige Kupplung der Windkraftanlage mit dem Kabel im Hinblick darauf, dass ferner die erfindungsgemäße Windkraftanlage dazu ausgebildet ist, sich im Betrieb vor bzw. mit dem Wind, mit der Kraftwirkung des Windes automatisch selbst nach der Windrichtung auszurichten, also selbsttätig um den Verankerungspunkt nach Lee zu schwenken. Hierdurch steht der Rotor stets optimal im Wind und wird damit eine höchstmögliche Leistungsausbeute erzielt. Diese Selbstausrichtung erfolgt dabei, ohne dass zusätzliche Einrichtungen benötigt würden; insbesondere werden keine darauf gerichteten Antriebs- oder Steuereinheiten benötigt, die zusätzlichen konstruktiven Aufwand und Energieverbrauch bedingen. Dies ist ein großer Vorteil im Vergleich zu z.B. einer Windkraftanlage, die im Betrieb stets gegen den Wind, d.h. nach Luv, stets über aufwendige mechanische und steuerungstechnische Einrichtungen ausgerichtet werden muss.

Bevorzugt wird die beschriebene Selbstausrichtung der Windkraftanlage ferner dadurch gefördert, dass zwischen dem Verbindungspunkt und einer im Wesentlichen vertikalen Drehebene des Rotors ein höchstmöglicher Horizontalabstand ausgebildet ist. Die Befestigung des Kabels an der Windkraftanlage ist also möglichst weit entfernt von einem Lateraldruckpunkt, d.h. einem Kräfteschwerpunkt der auf die vom Wind umströmten Flächen wirkenden Kräfte des Windes, vorgenommen. Der Lateraldruckpunkt der gesamten Windkraftanlage wird bestimmt z.B. durch den Tragmast oder die Maschinengondel, vor allem aber durch den Rotor und dabei insbesondere seine Rotorblätter. Der Rotor weist eine zumindest im Wesentlichen horizontale Rotationsachse auf, so dass sich die Rotorblätter bei Drehung des Rotors im Wesentlichen in einer zumindest weitgehend vertikalen Ebene bewegen, die als die vertikale Drehebene des Rotors bezeichnet ist. In dieser Ebene liegt auch der Lateraldruckpunkt auf den Rotor wirkender Windkräfte, die wesentlich zu Kräften beitragen, die die Selbstausrichtung ausführen.

Durch die möglichst weite Entfernung zwischen dem Verbindungspunkt und dem Lateraldruckpunkt der auf den Rotor wirkenden Windkräfte, d.h. der im wesentlichen vertikalen Drehebene des Rotors ist ein höchstmöglicher Horizontalabstand ausgebildet, der einen größtmöglichen Hebelarm für die die Selbstausrichtung ausführenden Kräfte ergibt, so dass diese auch gegebenenfalls seitlich auftreffenden Wasser-, d.h. insbesondere Meeresströmungen, besser entgegenwirken können. Die Entfernung ist allerdings insbesondere durch eine Einhaltung einer stabilen Lage der Windkraftanlage im Wasser und damit insbesondere durch die Abmessungen der Trageinheit begrenzt.

Bevorzugt ist dazu weiterhin der Rotor an der Maschinengondel in Betriebslage insbesondere leeseitig zur Maschinengondel angeordnet. Diese Konfiguration vergrößert den Abstand zwischen der Befestigung des Kabels an der Windkraftanlage im Verbindungspunkt und einem Lateraldruckpunkt der vom Wind umströmten Flächen des Rotors, d.h. der Rotorblätter, und unterstützt damit eine wirksame Ausrichtung der Windkraftanlage nach der Windrichtung.

Vorteilhaft ist ferner der Tragmast mit einer Pfeilung aufgerichtet, d.h. in einem vorgegebenen Winkel gegenüber der Lotrechten mit der im Betrieb angreifenden Windrichtung und somit in Richtung der Rotationsachse des Rotors geneigt. Diese Pfeilung des Tragmastes fördert den Abstand zwischen dem Lateraldruckpunkt des Winddrucks auf den Rotor und damit auf die Windkraftanlage einerseits und dem Verbindungspunkt des Kabels andererseits. Auch wird der Abstand zwischen dem Tragmast und dem Rotor dadurch größer, wodurch eine bessere Anströmung des Rotors im Betrieb erzielt wird.

Die vorbeschriebenen Merkmale der erfindungsgemäßen Windkraftanlage gewährleisten in ihrer Kombination, dass sich die Windkraftanlage im Betrieb auch unter äußerst widrigen Witterungsbedingungen bzw. Wasserströmungen und Seegang stets selbsttätig ausrichtet und auch aus starker Krängung wieder aufrichtet.

Vorteilhafte Ausgestaltungen der Erfindung sind in den Unteransprüchen gekennzeichnet.

Nach einer vorteilhaften Weiterbildung der Erfindung ist die Kupplung mit der Schleifkupplung und/oder der Wirbelkupplung an der Windkraftanlage kardanisch aufgehängt. Dabei können die einzelnen Bestandteile der Kupplung, nämlich die Schleifkupplung und die Wirbelkupplung, gesonderte oder auch eine gemeinsame kardanische Aufhängung aufweisen. Durch diese Ausgestaltung wird eine besonders gute Beweglichkeit in allen Freiheitsgraden erzielt.

Gemäß einer bevorzugten Weiterbildung der erfindungsgemäßen Windkraftanlage weist die Trageinheit je drei Ballasteinheiten und Auftriebseinheiten auf, wobei die Auftriebseinheiten in wenigstens nahezu den Ecken eines dreieckigen, zu einer Rotationsachse des wenigstens einen Rotors wenigstens weitgehend symmetrischen Grundrisses angeordnet sind und sich je eine der Ballasteinheiten zwischen je zwei der Auftriebseinheiten erstreckt. Die Lage der Rotationsachse des Rotors zum Grundriss der Trageinheit ist dabei in einer Draufsicht auf die Windkraftanlage, d.h. lotrecht von oben in Betriebslage, gesehen. Die zumindest im Wesentlichen dreieckige Konfiguration der Trageinheit ist einfach aufgebaut und bietet eine hohe mechanische Festigkeit, d.h. Formstabilität, wie sie für den Einsatz insbesondere auf See erforderlich ist. Außerdem bietet die beschriebene, im Wesentlichen dreieckige Konfiguration der Trageinheit eine hohe Lagestabilität im Wasser. Insgesamt ist diese Konfiguration daher gegenüber anderen möglichen Bauformen bevorzugt.

Als Ballast ist in den Ballasteinheiten bevorzugt Wasser als kostengünstig und universell verfügbar eingesetzt. Andere flüssige Ballastmaterialien mit bevorzugt höherem spezifischem Gewicht sind ebenfalls möglich. Vorteilhaft ist ein flüssiges Ballastmaterial auch durch seine einfache Handhabbarkeit. Es können jedoch auch feste Ballastmaterialien eingesetzt werden, oder die Ballasteinheiten können eine Kombination aus festen Ballastelementen, insbesondere als Grundbeschwerung, und einem flüssigen Ballastmaterial zum Befüllen und Trimmen am Einsatzort enthalten. Dies ermöglicht z.B. ein Verholen der Windkraftanlage oder auch nur mit der Trageinheit verbundener Teile davon auch in flachem Wasser. In einen Hafen bzw. auf eine Werft wird die erfindungsgemäße Windkraftanlage ohne Ballastwasser und daher mit nur geringem Tiefgang verholt. Am Einsatzort weist die erfindungsgemäße Windkraftanlage mit Ballastwasser unter Einsatzbedingungeneinen hohen Tiefgang auf.

Die Auftriebseinheiten sind bevorzugt mit abgeschlossenen Luftvolumina ausgebildet; wahlweise können auch andere Stoffe, bevorzugt Gase oder gashaltige Stoffe, eingesetzt werden. Auch ist eine wenigstens teilweise Füllung der Auftriebseinheiten mit porösen Stoffen, bevorzugt Kunststoffschäumen, möglich. Die letzteren ermöglichen einen höheren Sicherheitsgrad gegenüber Leckagen in den Auftriebseinheiten. Auch hier kann wahlweise eine einmalige, feste Befüllung oder eine für nachträgliche Trimmvorgänge variabel verbleibende Befüllung vorgesehen sein.

Die Ballasteinheiten und Auftriebseinheiten bilden auf diese Weise in der beschriebenen speziellen Anordnung die Trageinheit, insbesondere eine Schwimmerkonstruktion, in der Art, dass eine Selbstaufrichtung der Windkraftanlage auch bei Krängung aufgrund von Seegang und besonderen Windverhältnissen erfolgt.

Nach einer weiteren vorteilhaften Ausgestaltung der erfindungsgemäßen Windkraftanlage weisen die Auftriebseinheiten Doppelböden mit zusätzlichen Ballasteinheiten auf. Bevorzugt sind diese zusätzlichen Ballasteinheiten als Ballastwassertanks ausgebildet. Damit ist eine noch flexiblere Gestaltung der Windkraftanlage und eine noch bessere Anpassung an die Einsatzbedingungen, insbesondere ein noch besseres Trimmen am Einsatzort, möglich.

Bei einer weiteren bevorzugten Ausführungsform der erfindungsgemäßen Windkraftanlage ist der Tragmast auf der bezüglich des dreieckigen, zu der Rotationsachse des wenigstens einen Rotors wenigstens weitgehend symmetrischen Grundrisses mittigen Auftriebseinheit angeordnet. Die mittige Anordnung begünstigt eine einfache, leichte, stabile Konstruktion der Windkraftanlage. Der Tragmast ist dann besonders kurz und gerade trotz großer Masthöhe ausführbar. Es ergibt sich weiterhin auf einfache Weise eine günstige, bezüglich der Rotationsachse des Rotors in der Draufsicht auf die Windkraftanlage mittige Schwerpunktlage.

Nach einer anderen Ausführungsform der erfindungsgemäßen Windkraftanlage ist diese gekennzeichnet durch je wenigstens eine, insbesondere je eine, Strebe zum Ausbilden einer Verbindung zwischen dem Tragmast und den in dem dreieckigen, zu der Rotationsachse des wenigstens einen Rotors wenigstens weitgehend symmetrischen Grundriss seitwärts der Rotationsachse angeordneten Auftriebseinheiten. Der Tragmast und die Streben bilden damit eine insbesondere dreibeinige Anordnung, deren je eines Bein sich auf je einer der Auftriebseinheiten abstützt. In einer Abwandlung mit einer größeren Anzahl von Streben und/oder Auftriebseinheiten ist eine mehrbeinige Anordnung vorgesehen mit einer oder mehreren Abstützungen auf jeder oder auch nur einer ausgewählten Anzahl aller Auftriebseinheiten. Diese Konstruktionsweise erhöht die mechanische Festigkeit der gesamten Windkraftanlage und ermöglicht zugleich, das Gewicht des Tragmastes und damit den Massenschwerpunkt der gesamten Windkraftanlage niedrig sowie auch mittig zu halten. Überdies kann auch die Konstruktion der Trageinheit dadurch leicht und stabil ausgeführt werden.

In einer vorteilhaften Weiterbildung der erfindungsgemäßen Windkraftanlage sind die Ballasteinheiten als im Betriebszustand der Windkraftanlage unterhalb einer Wasserlinie angeordnete, je wenigstens zwei der Auftriebseinheiten verbindende Konstruktionselemente mit wenigstens nahezu waagerechten Ober- und Unterseiten ausgebildet. Diese Ausgestaltung trägt zu einer stabilen und ruhigen Lage der erfindungsgemäßen Windkraftanlage auch bei höherem Seegang bei. Der Seegang übt eine oszillierende Erregerkraft auf die schwimmende Struktur der Windkraftanlage aus, wobei die Frequenz dieser Oszillation, die Erregerfrequenz, durch Größe und Form der Wellen bestimmt ist. Der hohe Gewichtsanteil des Ballastes, z.B. des Ballastwassers, und die wenigstens nahezu horizontalen Unterwasserflächen der Ballasteinheiten verleihen der schwimmenden Struktur der Windkraftanlage eine geringe Eigenfrequenz ihrer oszillierenden Lage im Wasser, die weitaus niedriger als die Erregerfrequenz des Seegangs ist. Dadurch tritt nur eine geringe Wirkung der oszillierenden Erregerkraft auf die Windkraftanlage auf, so dass diese allenfalls geringe Bewegungen bei Seegang ausführt.

In einer noch anderen Ausführungsform der erfindungsgemäßen Windkraftanlage weisen die Auftriebseinheiten einen geringen Wasserlinienquerschnitt auf. Als solcher Wasserlinienquerschnitt ist hier eine waagerechte Querschnittsfläche durch die Auftriebseinheiten in Höhe der Wasserlinie im Betriebszustand bezeichnet. Dieser Wasserlinienquerschnitt bestimmt zusammen mit dem spezifischen Gewicht der Auftriebseinheiten in Höhe der Wasserlinie eine Änderung durch die Auftriebseinheiten bewirkter Auftriebskräfte bei Änderung der Eintauchtiefe der Auftriebseinheiten. Mit anderen Worten wird die Auftriebskraft durch das verdrängte Volumen und dessen Dichte, hier der Dichte von Wasser, nach dem Archimedischen Prinzip erzeugt. Je geringer also der Wasserlinienquerschnitt, auch als Wasserlinienfläche bezeichnet, ist, desto geringer sind die Änderungen der Auftriebskräfte bei Änderung der Eintauchtiefe der Auftriebseinheiten. Umgekehrt ändert sich bei Seegang die Eintauchtiefe. Bei geringem Wasserlinienquerschnitt führt dies aber nur zu geringen Änderungen der die Windkraftanlage zu Schwingungen anregenden Auftriebskräfte und damit nur zu geringen Bewegungen der Windkraftanlage bei bzw. durch Seegang.

Andererseits bedeutet wiederum ein zu geringer Wasserlinienquerschnitt, dass die Änderungen der Auftriebskräfte bei Änderung der Eintauchtiefe der Auftriebseinheiten zu gering werden. Eine Änderung der Eintauchtiefe z.B. durch Krängen der Windkraftanlage bei Sturm bewirkt dann nur noch eine zu geringe Änderung der Auftriebskräfte und damit eine zu geringe Kraft auf die Windkraftanlage zu deren Selbstaufrichtung.

Unter dem Begriff des geringen Wasserlinienquerschnitts ist daher im Rahmen der vorliegenden Erfindung ein Wasserlinienquerschnitt verstanden, der so gering dimensioniert ist, wie es möglich ist, ohne dass eine merkbar nachteilige Verringerung der Kräfte auf die Windkraftanlage zu deren Selbstaufrichtung eintritt, wobei der nachteiligen Wirkung dieser Verringerung der Kräfte auf die Windkraftanlage auch durch die geometrische Form und Lage der Auftriebselemente begegnet werden kann, indem die Auftriebselemente z.B. möglichst weit außen in der Trageinheit angeordnet werden.

Da die Übertragung der Erregerkraft auf die schwimmende Struktur der Windkraftanlage von der Größe des Wasserlinienquerschnitts und der Aus- bzw. Eintauchtiefe durch den Seegang abhängt und diese Übertragung nicht erwünscht ist, sind die Wasserlinienquerschnitte möglichst gering gewählt worden. Dadurch wird die Übertragung der Erregerkraft gering gehalten. Auch wird dadurch die Eigenfrequenz der Windkraftanlage gering gehalten und ein Auftreten einer Resonanz vermieden. Die Windkraftanlage übt dadurch keine heftigen Bewegungen aus, sondern liegt ruhig im Wasser. In einer Simulationsrechnung für ein Dimensionierungsbeispiel wurde eine Beschleunigung in der Maschinengondel von unter 0,4 g bei einer für die Verhältnisse z.B. in der Nordsee signifikanten Wellenhöhe von 5,0 m ermittelt.

Eine noch andere vorteilhafte Ausführungsform der erfindungsgemäßen Windkraftanlage ist dadurch gekennzeichnet, dass die Auftriebseinheiten und/oder die Ballasteinheiten strömungsgünstig ausgebildet sind, insbesondere strömungsgünstig in einer Richtung wenigstens nahezu parallel zur Rotationsachse des wenigstens einen Rotors.

Da Windrichtung und Wellenrichtung in der Regel nicht sehr voneinander abweichen, sind zur strömungsgünstigen Ausbildung in Richtung der Rotationsachse des wenigstens einen Rotors längliche Wasserlinienquerschnitte gewählt worden, und die Stirnflächen der Auftriebseinheiten bzw. der Ballasteinheiten ist nach vorn, d.h. entgegen der Windrichtung und Wellenrichtung, angespitzt, um steilen Seegang mit möglichst geringer Kraft zu teilen. Dadurch verringern sich durch Seegang und/oder Wasserströmung auf das Kabel bzw. Halteseil, die Kupplung mit der Windkraftanlage sowie den Verankerungspunkt aufgebrachte Kräfte und somit die Belastung und Bruchgefahr dieser Konstruktionselemente.

Eine noch andere bevorzugte Ausführungsform der erfindungsgemäßen Windkraftanlage ist gekennzeichnet durch eine Massen- und Auftriebsschwerpunktlage wenigstens nahezu im geometrischen Mittelpunkt eines Grundrisses der Trageinheit, d.h. betrachtet aus der Draufsicht auf die Windkraftanlage. Insbesondere bei einer Ausgestaltung mit drei in einem dreieckigen Grundriss angeordneten Auftriebseinheiten ist der Massen- und Auftriebsschwerpunkt vorteilhaft wenigstens nahezu mittig, d.h. in der geometrischen Mitte des dreieckigen Grundrisses, angeordnet. Bei der Anordnung des Massen- und Auftriebsschwerpunktes kann ferner vorteilhaft auch eine Berücksichtigung des Winddrucks in Richtung der Rotationsachse des wenigstens einen Rotors, d.h. in der Windrichtung in Betriebslage der Windkraftanlage, erfolgen, so dass diese auch bei größerer Windstärke, insbesondere bei Sturm, nicht unerwünscht stark nach Lee krängt.

Bevorzugt ist für eine stabile Lage der Windkraftanlage im Wasser dabei der Massenschwerpunkt unterhalb des Auftriebsschwerpunktes angeordnet. Jedoch kann bei der erfindungsgemäßen Windkraftanlage auch dann noch eine stabile Lage im Wasser gehalten werden, wenn der Massenschwerpunkt sich oberhalb des Auftriebsschwerpunktes befindet, bei Krängung der Windkraftanlage sich der Auftriebsschwerpunkt durch leeseitig stärkeres Eintauchen der Trageinheit nach Lee verlagert und diese Verlagerung durch Ausgestaltung der Trageinheit, insbesondere der Auftriebseinheiten, so weit erfolgt, dass gegenüber dem Massenschwerpunkt ein Hebelarm entsteht. Damit wird ein Moment hervorgerufen, das ein Aufrichten der Windkraftanlage aus der Krängung bewirkt. Es ist dabei davon ausgegangen, dass sich nur der Verdrängungsschwerpunkt verlagert. Der Massenschwerpunkt bleibt an seiner Position. So entsteht ein Abstand zwischen einem Vektor der Auftriebskraft zu einem Vektor der Gewichtskraft und somit ein aufrichtendes Moment.

Bei einer noch anderen bevorzugten Ausführungsform der erfindungsgemäßen Windkraftanlage ist das als Kombination einer Stromleitung und eines Halteseils ausgebildete Kabel am Verankerungspunkt mit einer Ankervorrichtung verbindbar. Dadurch erfolgt einfach und wirksam eine mechanische Verankerung am Grund des Gewässers, auf dem die erfindungsgemäße Windkraftanlage betrieben wird, z.B. auf dem Meeresboden, und zugleich eine elektrische Verbindung mit Abnehmern der gewonnenen elektrischen Energie über die Ankervorrichtung.

In einer weiteren bevorzugten Ausführungsform der erfindungsgemäßen Windkraftanlage weist der Tragmast einen in Profilform ausgebildeten Querschnitt, insbesondere einen in flügelartiger und/oder tropfenförmiger Profilform ausgebildeten Querschnitt, auf. Der Zweck dieser Ausgestaltung liegt darin, Verwirbelungen der Luftströmung hinter dem Tragmast zu vermeiden, durch die sich anderenfalls die Rotorblätter bewegen müssten. Insbesondere soll ein flügelartiges oder tropfenförmiges Profil verwendet werden. Besonders bevorzugt ist eine Ausgestaltung mit einem der sogenannten NACA-Profile, d.h. einem der zweidimensionalen, standardisierten Querschnitte von Tragflächenprofilen, wie sie vom vormaligen "National Advisory Committee for Aeronautics" für den Entwurf von Flugzeugtragflächen entwickelt wurden. Damit sind auf einfache Weise im Vergleich zu einer Ausbildung des Tragmastes z.B. mit einem kreisförmigen Profil besonders günstige, wenigstens nahezu verwirbelungsfreie Luftströmungen erzielbar.

Die Ausgestaltung des Tragmastes der Windkraftanlage in Profilform fördert außerdem die Selbstausrichtung der Windkraftanlage in die jeweilige Windrichtung, d.h. nach Lee, da das Profil in seiner Längsrichtung wenigstens nahezu in Richtung der Rotationsachse des Rotors angeordnet ist. Damit ergeben sich bei Anströmung des Profils rechtwinklig zur Längsrichtung und damit zur Rotationsachse wesentlich höhere Kräfte auf das Profil und damit den Tragmast als bei Anströmung in Richtung der Rotationsachse. Dies erhöht die Rückstellkräfte für die Selbstausrichtung und verringert zugleich den Winddruck auf den Tragmast in der optimalen Betriebsausrichtung zum Wind, was auch die Beanspruchung der Verankerung, d.h. des Kabels und der Kupplung, verringert.

Die Ausgestaltung des Tragmastes der Windkraftanlage in Profilform ergibt außerdem den Vorteil, dass der Profilmast in der Hauptbelastungsrichtung bei optimaler Ausrichtung zum Wind das höchste Widerstandsmoment bietet und deshalb mit wesentlich geringeren Wandstärken dimensioniert werden kann als z.B. ein Tragmast mit einem runden Profil, welches in jeder Richtung das gleiche Widerstandsmoment aufweist und daher auch in einer Belastungsrichtung auf ein hohes Widerstandsmoment ausgelegt werden muss, in der eine entsprechend hohe Belastung im Betrieb nicht auftritt, und welches somit überdimensioniert und damit unnötig teuer und schwer wäre.

Nach einer weiteren bevorzugten Ausführungsform der erfindungsgemäßen Windkraftanlage ist eine kraftschlüssige, energieübertragende Verbindung zwischen dem wenigstens einen Rotor und dem wenigstens einen elektrischen Generator getriebelos ausgebildet. Diese Verbindung weist somit kein Getriebe zwischen Rotor und Generator auf, sondern lediglich eine zumindest im Wesentlichen starre Drehmomentübertragung, was ebenfalls den Wartungsaufwand vermindert, die Stabilität im Dauerbetriebes fördert und Energieverluste verringert.

### Kurze Beschreibung der Zeichnungen

Ausführungsbeispiele der Erfindung sind in der Zeichnung dargestellt und werden im nachfolgenden näher beschrieben, wobei übereinstimmende Elemente in allen Figuren mit denselben Bezugszeichen versehen sind und eine wiederholte Beschreibung dieser Elemente weggelassen wird. Es zeigen:
Figur 1 ein Beispiel für eine erfindungsgemäße Windkraftanlage in schematischer, perspektivischer Darstellung, und
Figur 2 eine schematische Seitenansicht des Beispiels der Windkraftanlage gemäß Figur 1.

### Bevorzugte Ausführungsformen der Erfindung

In den beiden Figuren ist ein Ausführungsbeispiel einer erfindungsgemäßen schwimmfähigen Offshore-Windkraftanlage mit dem Bezugszeichen 100 bezeichnet. Diese umfasst eine Trageinheit 101, die insbesondere als Schwimmereinheit ausgestaltet und mit je drei Ballasteinheiten 102 und Auftriebseinheiten 103 ausgebildet ist. Dabei sind bevorzugt die Auftriebseinheiten 103 in einem Doppelboden auch mit Ballasttanks ausgerüstet. Die Auftriebseinheiten 103 sind an Ecken eines im Wesentlichen dreieckigen Grundrisses angeordnet und untereinander mit je einer der Ballasteinheiten 102 verbunden. Auf einer ersten der Auftriebseinheiten 103 ist ein Tragmast 104 in einer leichten Pfeilung, d.h. Neigung zur Mitte des im wesentlichen dreieckigen Grundrisses der Trageinheit 101 hin, angeordnet. Auf dem Tragmast 104 ist an seinem oberen Ende eine Maschinengondel 105 fest, d.h. insbesondere nicht drehbar, angeordnet. Die Maschinengondel 105 enthält einen nicht dargestellten elektrischen Generator, zu dessen Antrieb durch Windkraft an Lee des Tragmastes 104 und damit der Maschinengondel 105 ein um eine in Betriebslage zumindest im Wesentlichen waagerecht ausgerichtete Rotationsachse 117 drehbarer Rotor 106 angeordnet ist. Eine ebenfalls nicht dargestellte, kraftschlüssige, energieübertragende Verbindung zwischen dem Rotor 106 und dem elektrischen Generator ist bevorzugt getriebelos ausgebildet. Auf etwa halber Höhe des Tragmastes 104 sind beidseitig Streben 107, je eine auf jeder Seite, endseitig mit dem Tragmast 104 verbunden. Die Streben 107 sind mit ihren jeweils anderen Enden auf je einer der Auftriebseinheiten 103 abgestützt. Auf diese Weise ist von der Trageinheit 101, dem Tragmast 104 und den Streben 107 eine Konstruktion in der Form eines Tetraeders gebildet, die eine hohe mechanische Festigkeit sowie eine stabile Lage beim Aufschwimmen im Wasser bietet. Die stabile Lage beim Aufschwimmen im Wasser ergibt sich auch durch die Anordnung der Ballasteinheiten 102 und Auftriebseinheiten 103 zueinander. Die Leeseite der dargestellten Windkraftanlage 100 im Betrieb ist durch Pfeile 108 zusätzlich verdeutlicht, die die Windrichtung im Betrieb der Windkraftanlage 100 symbolisieren.

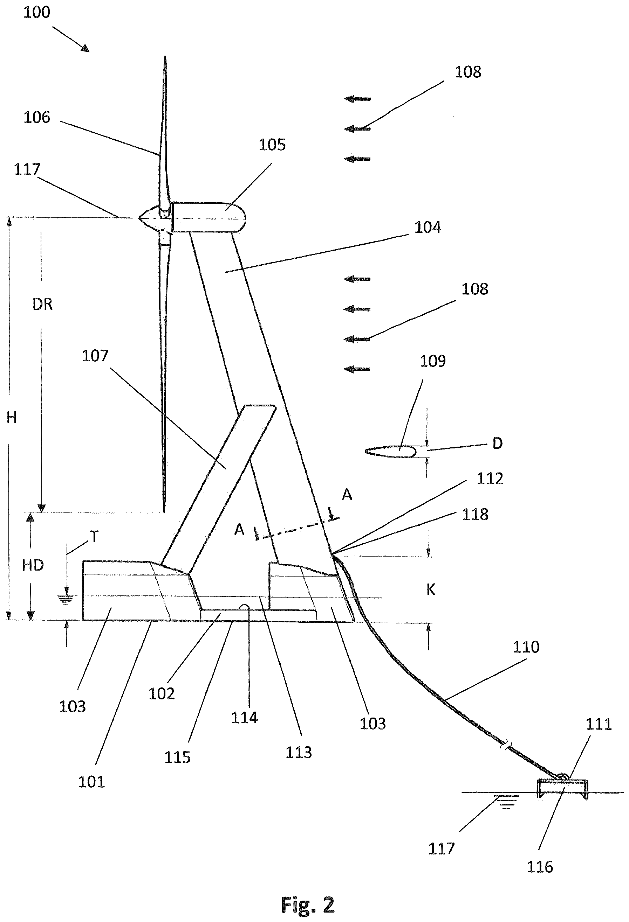

Der Tragmast 104 weist entlang einer Schnittebene A-A einen in Profilform ausgebildeten Querschnitt, insbesondere einen in flügelartiger und/oder tropfenförmiger Profilform ausgebildeten Querschnitt, auf, der in Figur 2 mit dem Bezugszeichen 109 in einer Detailskizze wiedergegeben ist. Durch diese hier bevorzugt bezüglich einer Längsachse symmetrische Profilform ist eine strömungsgünstige Gestaltung mit verwirbelungsfreier Umströmung durch die Luft, geringem Windwiderstand und höchstem Widerstandsmoment in der Hauptbelastungsrichtung bei optimaler Ausrichtung zum Wind gegeben. Dadurch ist der Tragmast 104 leicht und trotzdem äußerst belastbar aufgebaut. Bevorzugt sind die Streben 107 mit derselben oder einer im Wesentlichen ähnlichen oder übereinstimmenden Profilform ausgestaltet, um auch hier eine optimale Umströmung mit geringem Windwiderstand bei hoher Festigkeit und geringem Gewicht zu erzielen. Dadurch wird nicht nur die mechanische Stabilität der gesamten Windkraftanlage erhöht, sondern auch die Einhaltung einer niedrigen Massenschwerpunktlage und eines geringen Windwiderstands der gesamten Windkraftanlage gewährleistet.

Die Windkraftanlage 100 richtet sich im Betrieb selbsttätig nach der Windrichtung derart aus, dass der Tragmast 104 luvseitig und der Rotor 106 leeseitig stehen. Da die Windkraftanlage 100 im Betrieb auf dem Gewässer, auf dem sie eingesetzt ist, schwimmt, erfolgt diese Ausrichtung durch entsprechende Drehung der gesamten Windkraftanlage 100 auf dem Wasser. Dazu ist die Windkraftanlage zum Halten an einer Betriebsposition, d.h. der Position auf dem Gewässer, an der sie betrieben wird, durch ein einziges als Kombination einer Stromleitung und eines Halteseils ausgebildetes Kabel 110 mit einem einzigen Verankerungspunkt 111 verbindbar, wobei eine Kupplung 112 in einem einzigen Verbindungspunkt 118 zwischen dem Kabel 110 und der Windkraftanlage 100 angeordnet und zu einer elektrischen Verbindung mit einer Schleifkupplung und zu einer mechanischen Kraftübertragung mit einer Wirbelkupplung ausgebildet ist. Für diese Konstruktionselemente der Kupplung 112 sind an sich bekannte Bauformen eingesetzt, so dass für Kupplung 112 und Kabel 110 insgesamt eine einfache und zuverlässige Ausführung gebildet ist. Im Ergebnis werden dabei die auftretenden mechanischen Kräfte wenigstens nahezu vollständig von der Wirbelkupplung aufgenommen, so dass die Schleifkupplung von mechanischen Belastungen durch Kräfte freigehalten wird, die durch das Halten der Windkraftanlage an der Betriebsposition auftreten.

Der in den Ballasteinheiten 102 aufgenommene Ballast ist z.B. durch Wasser gebildet, es können aber auch andere flüssige Stoffe oder auch wenigstens teilweise fester Ballast eingesetzt sein. Vorteilhaft ist in wenigstens einem Teil der Ballasteinheiten 102 eine Unterteilung in z.B. mehrere Ballasttanks oder eine Kombination aus festen Ballastelementen und Ballasttanks oder dergleichen vorgenommen, um eine bessere Trimmbarkeit der Windkraftanlage 100 zu erhalten. Auch sind Einrichtungen vorsehbar, mit denen ein Trimmen des Ballasts auch während des Betriebs ermöglicht wird, z.B. zum Anpassen an sich ändernde Witterungsbedingungen wie Seegang, Windstärke, und dergleichen.

In den Auftriebseinheiten 103 ist zum Erzeugen des benötigten Auftriebs insbesondere Luft oder ein anders Gas, ggf. ein Inertgas zum Verringern von Korrosion, angeordnet. Auch können die Auftriebseinheiten 103 wahlweise wenigstens zum Teil mit gashaltigen Schäumen, z.B. Kunststoffschäumen, gefüllt sein, wodurch auch eine größere Widerstandsfähigkeit gegen Havarien oder andere Leckagen und damit höhere Sicherheit gegen Sinken gegeben ist. Die Ballasteinheiten 102 und Auftriebseinheiten 103 bilden in ihrer speziellen Anordnung eine Konfiguration der Trageinheit 101 derart, dass eine Selbstaufrichtung der Windkraftanlage auch bei starker Krängung aufgrund von Seegang und besonderen Windverhältnissen erfolgt. Damit wird ebenfalls eine hohe Sicherheit vor Betriebsbeeinträchtigungen, Beschädigungen oder gar Verlust der Windkraftanlage 100 erhalten.

Bei der dargestellten Windkraftanlage 100 sind die Ballasteinheiten 102 als im Betriebszustand der Windkraftanlage 100 unterhalb einer Wasserlinie 113, bis zu der die Windkraftanlage im Betriebszustand eintaucht, angeordnete Konstruktionselemente mit wenigstens nahezu waagerechten Ober- und Unterseiten 114 bzw. 115 ausgebildet und verbinden, wie bereits beschrieben, je wenigstens zwei der Auftriebseinheiten 103. Die wenigstens nahezu waagerechten Ober- und Unterseiten 114 bzw. 115 verschaffen der Windkraftanlage 100 eine geringe Eigenfrequenz ihrer Schwingungen im Wasser, d.h. insbesondere ihrer rollenden und stampfenden Bewegungen bei Seegang, und verringern somit diese Bewegungen.

Die Auftriebseinheiten 103 weisen einen geringen Wasserlinienquerschnitt auf, d.h. eine geringe waagerechte Querschnittsfläche in Höhe der Wasserlinie 113. Dadurch werden die zu Schwingungen der Windkraftanlage 100 anregenden Auftriebskräfte des Seegangs auf die Trageinheit 101 und somit die durch diese Auftriebskräfte hervorgerufenen Bewegungen bei Seegang verringert. Ferner sind insbesondere die die Auftriebseinheiten 103 und vorteilhaft auch die Ballasteinheiten 102 strömungsgünstig ausgebildet, insbesondere strömungsgünstig in der Richtung wenigstens nahezu parallel zur Rotationsachse 117 des Rotors 106. Dazu sind insbesondere die Auftriebseinheiten 103 an ihren der in Betriebslage im Wesentlichen auftretenden Wasser- und Luftströmung entgegen gerichteten Endbereichen spitz zulaufend gestaltet.

Insgesamt ist die vorbeschriebene Trageinheit 101 mit den Ballasteinheiten 102 und den Auftriebseinheiten 103 als Halbtaucher ausgebildet.

Die strömungsgünstige Gestaltung der Trageinheit 101, des Tragmastes 104, der Streben 107 sowie weiterhin auch der Maschinengondel 105 bewirkt eine Verringerung der durch Seegang bzw. Wasserströmung sowie Windkräfte auf das Kabel 110, die Kupplung 112 und den Verankerungspunkt 111 aufgebrachten Kräfte, wodurch die letztgenannten Konstruktionselemente einerseits geringer beansprucht und damit vor Versagen besser geschützt sind und andererseits entsprechend leichter und materialsparender ausgeführt werden können.

Bei der dargestellten Windkraftanlage 100 befindet sich vorteilhaft die Lage sowohl des Massen- als auch des Auftriebsschwerpunkts wenigstens nahezu im geometrischen Mittelpunkt der Draufsicht auf die Trageinheit 101. Damit ist eine möglichst richtungsunabhängige Sicherheit gegen Kentern der Windkraftanlage 100 bei Krängung in Sturm oder schwerer See gegeben. Bei der Festlegung der Schwerpunkte kann zusätzlich der Winddruck berücksichtigt werden; z.B. kann eine Verlagerung des Ballasts durch Umpumpen von Ballastwasser je nach Winddruck und damit Krängung der Windkraftanlage 100 vorgenommen werden, um stets eine gerade Lage im Wasser, d.h. eine Lage ohne Krängung, einzuhalten.

Die Windkraftanlage 100 ist über das als Kombination einer Stromleitung und eines Halteseils ausgebildete Kabel 110 am Verankerungspunkt 111 mit einer Ankervorrichtung 116 verbunden, über die sowohl eine mechanische Verankerung der Windkraftanlage 100 am Grund des Gewässers, insbesondere am Meeresboden 117, als auch eine elektrische Verbindung mit einem elektrischen Energietransport- und - verteilungsnetz hergestellt ist. Eine derartige Ankervorrichtung 116 ist z.B. durch ein Betonelement, bevorzugt durch ein am Betriebs- und Verankerungsort mit zusätzlichem Ballast wie Wasser oder insbesondere Sand befüllbares Betonelement, gebildet. An Stelle des Betonelements kann die Ankervorrichtung 116 auch ein Stahlelement aufweisen.

In einem Dimensionierungsbeispiel weist die Windkraftanlage 100 folgende Abmessungen auf:
- Höhe von der Unterseite der Trageinheit 101, d.h. der Unterseite 115 der Ballastelemente 102, bis zur Rotationsachse 117 des Rotors 106: H = 105 m;
- Tauchtiefe zwischen der Wasserlinie 113 und der Unterseite der Trageinheit 101, d.h. der Unterseite 115 der Ballastelemente 102: T = 6,50 m;
- Abstand zwischen dem Verbindungspunkt 118, d.h. der Kupplung 112, und der Unterseite der Trageinheit 101, d.h. der Unterseite 115 der Ballastelemente 102: K = 17,50 m;
- Profildicke des Querschnitts 109 des Tragmastes 104: D = 3,00 m;
- Drehkreisdurchmesser des Rotors 106: DR = 154,00 m;
- Abstand des Drehkreises von der Unterseite der Trageinheit 101, d.h. der Unterseite 115 der Ballastelemente 102: HD = 28,00 m;
das entspricht im Betrieb einem Abstand des Drehkreises von der Wasserlinie 113 von 21,50 Metern.

In einem weiteren Dimensionierungsbeispiel weist die Windkraftanlage 100 folgende vom vorstehenden abweichende Abmessungen auf, wobei die übrigen Größen gleich sind:
- Höhe von der Unterseite 115 der Ballastelemente 102 bis zur Rotationsachse 117 des Rotors 106: H = 111,50 m;
- Tauchtiefe zwischen der Wasserlinie 113 und der Unterseite 115 der Ballastelemente 102: T = 13,00 m;
- Abstand zwischen dem Verbindungspunkt 118, d.h. der Kupplung 112, und der Unterseite der Trageinheit 101, d.h. der Unterseite 115 der Ballastelemente 102: K = 24,00 m;
- Abstand des Drehkreises von der Unterseite der Trageinheit 101, d.h. der Unterseite 115 der Ballastelemente 102: HD = 34,50 m

Dieses letztere Dimensionierungsbeispiel wird bezüglich seiner Stabilität gegen Wind und Seegang als ein besonders günstiges bezeichnet.

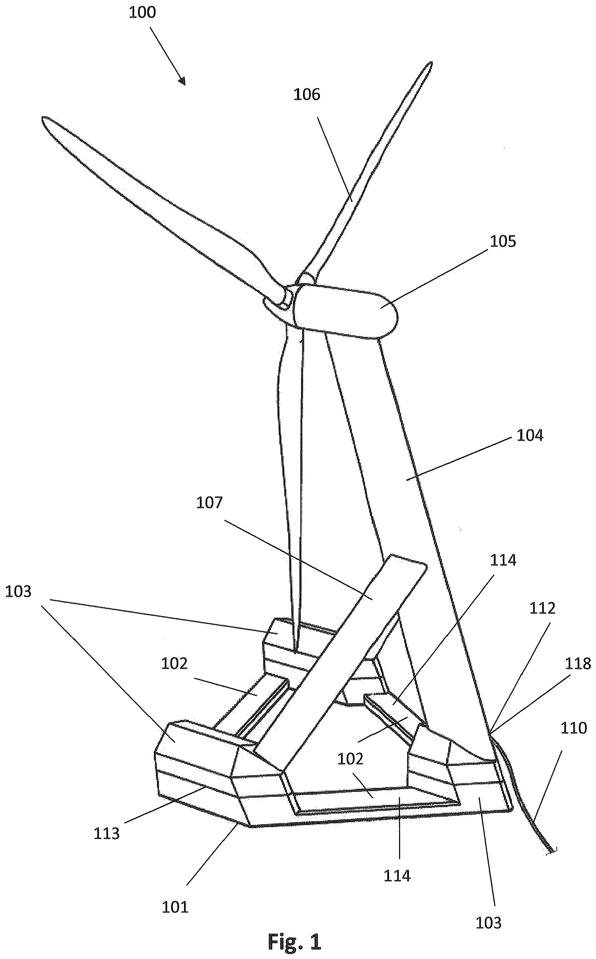

Es ist der Vollständigkeit halber anzumerken, dass die Darstellung in den Figuren 1 und 2 nicht für alle Ausführungsbeispiele bzw. Dimensionierungsbeispiele der erfindungsgemäßen Windkraftanlage 100 exakt maßstäblich vorgenommen ist.

## Patentansprüche

1. Schwimmfähige Offshore-Windkraftanlage (100), umfassend die folgenden Merkmale:
• die Windkraftanlage (100) ist durch ein als Kombination einer wenigstens nahezu belastungsfrei gehaltenen Stromleitung und eines wenigstens weitgehend alle zum Halten der Windkraftanlage (100) an einem einzigen ortsfesten Verankerungspunkt (111) auftretenden mechanischen Kräfte aufnehmenden Halteseils ausgebildetes Kabel (110) in sechs Freiheitsgraden beweglich mit dem Verankerungspunkt (111) verbindbar, wobei eine Kupplung (112) in einem einzigen Verbindungspunkt (118) zwischen dem Kabel (110) und der Windkraftanlage (100) angeordnet und zu einer elektrischen Verbindung mit einer Schleifkupplung und zu einer mechanischen Kraftübertragung mit einer Wirbelkupplung ausgebildet ist;
• die Windkraftanlage (100) weist eine Trageinheit (101), insbesondere eine Schwimmereinheit, auf, die als Halbtaucher mit Ballasteinheiten (102) und Auftriebseinheiten (103) ausgebildet ist;
• die Windkraftanlage (100) weist einen fest mit der Trageinheit (101) verbundenen Tragmast (104) mit einer auf diesem fest angeordneten Maschinengondel (105) mit wenigstens einem Rotor (106) und wenigstens einem elektrischen Generator auf;
• zwischen dem Verbindungspunkt (118) und einer im Wesentlichen vertikalen Drehebene des Rotors (106) ist ein höchstmöglicher Horizontalabstand ausgebildet.

2. Windkraftanlage (100) nach Anspruch 1, **dadurch gekennzeichnet, dass** die Kupplung (112) mit der Schleifkupplung und/oder der Wirbelkupplung an der Windkraftanlage (100) kardanisch aufgehängt ist.

3. Windkraftanlage (100) nach Anspruch 1 oder 2, **dadurch gekennzeichnet, dass** die Trageinheit (101) je drei Ballasteinheiten (102) und Auftriebseinheiten (103) aufweist, wobei die Auftriebseinheiten (103) in wenigstens nahezu den Ecken eines dreieckigen, zu einer Rotationsachse (117) des wenigstens einen Rotors (106) wenigstens weitgehend symmetrischen Grundrisses angeordnet sind und sich je eine der Ballasteinheiten (102) zwischen je zwei der Auftriebseinheiten (103) erstreckt.

4. Windkraftanlage (100) nach Anspruch 3, **dadurch gekennzeichnet, dass** die Auftriebseinheiten (103) Doppelböden mit zusätzlichen Ballasteinheiten aufweisen.

5. Windkraftanlage (100) nach Anspruch 3 oder 4, **dadurch gekennzeichnet, dass** der Tragmast (104) auf der bezüglich des dreieckigen, zu der Rotationsachse (117) des wenigstens einen Rotors (106) wenigstens weitgehend symmetrischen Grundrisses mittigen Auftriebseinheit (103) angeordnet ist.

6. Windkraftanlage (100) nach Anspruch 3, 4 oder 5, **gekennzeichnet durch** je wenigstens eine, insbesondere je eine, Strebe (107) zum Ausbilden einer Verbindung zwischen dem Tragmast (104) und den in dem dreieckigen, zu der Rotationsachse (117) des wenigstens einen Rotors (106) wenigstens weitgehend symmetrischen Grundriss seitwärts der Rotationsachse (117) angeordneten Auftriebseinheiten (103).

7. Windkraftanlage (100) nach einem oder mehreren der vorhergehenden Ansprüche, **dadurch gekennzeichnet, dass** die Ballasteinheiten (102) als im Betriebszustand der Windkraftanlage (100) unterhalb einer Wasserlinie (113) angeordnete, je wenigstens zwei der Auftriebseinheiten (103) verbindende Konstruktionselemente mit wenigstens nahezu waagerechten Ober- und Unterseiten (114, 115) ausgebildet sind.

8. Windkraftanlage (100) nach einem oder mehreren der vorhergehenden Ansprüche, **dadurch gekennzeichnet, dass** die Auftriebseinheiten (103) einen geringen Wasserlinienquerschnitt aufweisen.

9. Windkraftanlage (100) nach einem oder mehreren der vorhergehenden Ansprüche, **dadurch gekennzeichnet, dass** die Auftriebseinheiten (103) und/oder die Ballasteinheiten (102) strömungsgünstig ausgebildet sind, insbesondere strömungsgünstig in einer Richtung wenigstens nahezu parallel zur Rotationsachse (117) des wenigstens einen Rotors (106).

10. Windkraftanlage (100) nach einem oder mehreren der vorhergehenden Ansprüche, **gekennzeichnet durch** eine Massen- und Auftriebsschwerpunktlage wenigstens nahezu im geometrischen Mittelpunkt eines Grundrisses der Trageinheit (101).

11. Windkraftanlage (100) nach einem oder mehreren der vorhergehenden Ansprüche, **dadurch gekennzeichnet, dass** das als Kombination einer Stromleitung und eines Halteseils ausgebildete Kabel (110) am Verankerungspunkt (111) mit einer Ankervorrichtung (116) verbindbar ist.

12. Windkraftanlage (100) nach einem oder mehreren der vorhergehenden Ansprüche, **dadurch gekennzeichnet, dass** der Tragmast (104) einen in Profilform ausgebildeten Querschnitt (109), insbesondere einen in flügelartiger und/oder tropfenförmiger Profilform ausgebildeten Querschnitt (109), aufweist.

13. Windkraftanlage (100) nach einem oder mehreren der vorhergehenden Ansprüche, **dadurch gekennzeichnet, dass** eine kraftschlüssige, energieübertragende Verbindung zwischen dem wenigstens einen Rotor (106) und dem wenigstens einen elektrischen Generator getriebelos ausgebildet ist.

## Claims

1. A floatable offshore wind power plant (100), comprising the following features:
• by means of a cable (110) designed as a combination of a power line, which is held at least nearly without loading, and a holding cable, which at least to a large extent absorbs all of the mechanical forces occurring for holding the wind power plant (100) at a single stationary anchoring point (111), the wind power plant (100) can be connected to the anchoring point (111) so as to be movable in six degrees of freedom, wherein a coupling (112) is arranged in a single connecting point (118) between the cable (110) and the wind power plant (100) and is formed with a slip coupling to provide an electrical connection and with a swivel coupling to provide a mechanical transmission of force;
• the wind power plant (100) has a supporting unit (101), in particular a float unit, which is designed as a semi-submersible with ballast units (102) and buoyancy units (103);
• the wind power plant (100) has a supporting mast (104) fixedly connected to the supporting unit (101) and having a machine nacelle (105) fixedly arranged thereon and has at least one rotor (106) and at least one electric generator;
• a highest possible horizontal distance is formed between the connecting point (118) and a substantially vertical plane of rotation of the rotor (106)

2. The wind power plant (100) of claim 1 or 2, **characterized in that** the coupling (112) with the slip coupling and/or the swivel coupling is suspended cardanically on the wind power plant (100).

3. The wind power plant (100) according to claim 1 or 2, **characterized in that** the supporting unit (101) has three ballast units (102) and buoyancy units (103) each, wherein the buoyancy units (103) are arranged in at least virtually the corners of a triangular plan view which is at least substantially symmetrical to an axis of rotation (117) of the at least one rotor (106), and one of the ballast units (102) each extends between each two of the buoyancy units (103).

4. The wind power plant (100) according to claim 3, **characterized in that** the buoyancy units (103) have double bottoms with additional ballast units.

5. The wind power plant (100) according to claim 3 or 4, **characterized in that** the supporting mast (104) is arranged on the buoyancy unit (103) which is centric with respect to the triangular plan view, which is at least substantially symmetrical to the axis of rotation (117) of the at least one rotor (106).

6. The wind power plant (100) according to claim 3, 4 or 5, **characterized in** at least one, in particular one, strut (107) each for forming a connection between the supporting mast (104) and the buoyancy units (103) which are arranged laterally to the axis of rotation (117) in the triangular plan view, which is at least substantially symmetrical to the axis of rotation (117) of the at least one rotor (106).

7. The wind power plant (100) according to one or several of the preceding claims, **characterized in that** the ballast units (102) are designed as construction elements which, in the operating state of the wind power plant (100), are arranged below a water line (113), connect at least two of the buoyancy units (103) each and have at least virtually horizontal upper and lower sides (114, 115).

8. The wind power plant (100) according to one or several of the preceding claims, **characterized in that** the buoyancy units (103) have a low water line cross section.

9. The wind power plant (100) according to one or several of the preceding claims, **characterized in that** the buoyancy units (103) and/or the ballast units (102) are designed aerodynamically, in particular aerodynamically in a direction at least virtually parallel to the axis of rotation (117) of the at least one rotor (106).

10. The wind power plant (100) according to one or several of the preceding claims, **characterized in,** regarding mass and buoyancy, a position of center of gravity at least virtually in the geometrical center of a plan view of the supporting unit (101).

11. The wind power plant (100) according to one or several of the preceding claims, **characterized in that** the cable (110) designed as a combination of a power line and a holding cable at the anchoring point (11) is connectable to an anchoring device (116).

12. The wind power plant (100) according to one or several of the preceding claims, **characterized in that** the supporting mast (104) has a cross section (109) formed in a profile shape, in particular a cross section (109) formed in a wing-like and/or droplet-shaped profile shape.

13. The wind power plant (100) according to one or several of the preceding claims, **characterized in that** a non-positive, energy-transmitting connection is formed gearlessly between the at least one rotor (106) and the at least one electric generator.

## Revendications

1. Éolienne flottante (100) en mer, comportant les caractéristiques suivantes :
• l'éolienne (100) est susceptible d'être reliée avec une mobilité de six degrés de liberté avec le point d'ancrage (111) par un câble (110) conçu sous la forme d'une association d'une ligne électrique maintenue pratiquement sans contrainte et d'un filin de retenue absorbant au moins largement toutes les forces mécaniques s'exerçant pour retenir l'éolienne (100) sur un unique point d'ancrage (111), un accouplement (112) étant placé dans un unique point de liaison (118) entre le câble (110) et l'éolienne (100) et étant conçu pour établir une connexion électrique avec un accouplement glissant et pour mettre en oeuvre un transfert d'une force mécanique avec un accouplement pivotant ;
• l'éolienne (100) comporte une unité porteuse (101), notamment une unité flottante, qui est conçue sous la forme d'une structure semi-submersible pourvue d'unités de lestage (102) et d'unités de flottabilité (103) ;
• l'éolienne (100) comporte un mât porteur (104) solidement assemblé avec l'unité porteuse (101), pourvu d'une nacelle (105) fixement montée sur celui-ci avec au moins un rotor (106) et au moins un générateur électrique ;
• entre le point de liaison (118) et un plan de rotation sensiblement vertical du rotor (106) il est formé un écart horizontal aussi haut que possible.

2. Éolienne (100) selon la revendication 1, **caractérisée en ce que** l'accouplement (112) est accroché à la Cardan avec l'accouplement et/ou l'accouplement pivotant sur l'éolienne (100).

3. Éolienne (100) selon la revendication 1 ou 2, **caractérisée en ce que** l'unité porteuse (101) comporte chaque fois trois unités de lestage (102) et unités de flottabilité (103), les unités de flottabilité (103) étant placées dans au moins approximativement les angles d'une projection horizontale triangulaire, au moins largement symétrique à un axe de rotation (117) de l'au moins un rotor (106) et chaque fois l'une des unités de lestage (102) s'étendant entre chaque fois deux des unités de flottabilité (103).

4. Éolienne (100) selon la revendication 3, **caractérisée en ce que** les unités de flottabilité (103) comportent des doubles fonds inférieurs avec des unités de lestage supplémentaires.

5. Éolienne (100) selon la revendication 3 ou 4, **caractérisée en ce que** le mât porteur (104) est placé sur l'unité de flottabilité (103) centrale par rapport à la projection horizontale au moins largement symétrique à un axe de rotation (117) de l'au moins un rotor (106).

6. Éolienne (100) selon la revendication 3, 4 ou 5, **caractérisée par** chaque fois au moins une, notamment par chaque fois une entretoise (107) pour former une liaison entre le mât porteur (104) et les unités de flottabilité (103) placées latéralement à l'axe de rotation (117) de la projection horizontale au moins largement symétrique à un axe de rotation (117) de l'au moins un rotor (106).

7. Éolienne (100) selon l'une quelconque ou plusieurs des revendications précédentes, **caractérisée en ce que** les unités de lestage (102) sont conçues sous la forme d'éléments de construction placés en-dessous d'une ligne de flottaison (113), en état de fonctionnement de l'éolienne (100), reliant chacun au moins deux des unités de flottabilité (103), présentant des faces supérieure et inférieure (114, 115) au moins approximativement horizontales.

8. Éolienne (100) selon l'une quelconque ou plusieurs des revendications précédentes, **caractérisée en ce que** les unités de flottabilité (103) présentent une faible section transversale de ligne de flottaison.

9. Éolienne (100) selon l'une quelconque ou plusieurs des revendications précédentes, **caractérisée en ce que** les unités de flottabilité (103) et/ou les unités de lestage (102) sont conçues pour favoriser l'écoulement, notamment pour favoriser l'écoulement dans une direction au moins approximativement parallèle à l'axe de rotation (117) de l'au moins un rotor (106).

10. Éolienne (100) selon l'une quelconque ou plusieurs des revendications précédentes, **caractérisée par** une position du centre de gravité en masse et en flottabilité située au moins approximativement dans le point médian géométrique d'une projection horizontale de l'unité porteuse (101).

11. Éolienne (100) selon l'une quelconque ou plusieurs des revendications précédentes, **caractérisée en ce que** le câble (110) conçu sous la forme une d'association d'une ligne électrique et d'un filin de maintien est susceptible d'être relié avec un dispositif d'ancrage (116) au point d'ancrage (111).

12. Éolienne (100) selon l'une quelconque ou plusieurs des revendications précédentes, **caractérisée en ce que** le mât porteur (104) comporte une section transversale (109), conçue sous la forme d'un profilé, notamment une section transversale (109) conçue sous la forme d'un profilé en forme d'aile et/ou en forme de goutte.

13. Éolienne (100) selon l'une quelconque ou plusieurs des revendications précédentes, **caractérisée en ce qu'**une liaison par complémentarité de force, transmettant l'énergie est conçue sans engrenage entre l'au moins un rotor (106) et l'au moins un générateur électrique.
